(19) 

**Europäisches Patentamt**
**European Patent Office**
**Office européen des brevets**

(11) **EP 4 679 325 A1**

(12) **EUROPEAN PATENT APPLICATION**

(43) Date of publication:
**14.01.2026 Bulletin 2026/03**

(51) International Patent Classification (IPC):
**G06N 3/045** (2023.01)   **G06N 3/0475** (2023.01)

(21) Application number: **25188746.9**

(22) Date of filing: **10.07.2025**

(52) Cooperative Patent Classification (CPC):
**G06N 3/045; G06N 3/044; G06N 3/047;**
**G06N 3/0475; G06N 3/08; G06N 7/01; G06N 20/20**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **12.07.2024 IN 202421053533**

(71) Applicant: **Tata Consultancy Services Limited**
**Maharashtra (IN)**

(72) Inventors:
• **RANJAN, Ashutosh**
  **411057 Pune, Maharashtra (IN)**
• **SRIVASTAVA, Vivek**
  **110001 New Delhi, Delhi (IN)**
• **KARANDE, Shirish Subhash**
  **411006 Pune, Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR MULTI-SUBJECT PERSONALIZATION WITH SELECTIVE U-NET INFLUENCE**

(57)     Recently, an uptick in the interest in providing interpretability to foundational models has been observed. However, the significant effort is limited to the large language models. Diffusion models have proven significant for the generative AI landscape and the interpretability of these models The present disclosure presents a novel selective U-Net influence (SelUT) technique for greater control and interpretability of DreamBooth for multi-subject personalization task. Specifically, the influence of the trained U-Net block(s) is controlled in the present disclosure during model inference. It provides a greater handle on interpreting the contribution of individual U-Net blocks across quality aspects such as identity disentanglement, image aesthetic, human preference, etc. Furthermore, we present an ensemble selection strategy to incorporate the dynamicity between base DreamBooth and the models trained with selective influence of U-Net block(s) which significantly improve the capability of DreamBooth for multi subject personalization.

**FIG. 1B**

EP 4 679 325 A1

**Description**

CROSS-REFERENCE TO RELATED APPLICATIONS AND PRIORITY

The present application claims priority to Indian application no. 202421053533, filed on 12 July 2024.

TECHNICAL FIELD

The disclosure herein generally relates to the field of image diffusion and, more particularly, to a method and system for multi-subject personalization with selective U-Net influence.

BACKGROUND

Recently, an uptick in the interest in providing interpretability to foundational models has been observed. However, significant effort is limited to the large language models (LLMs). Diffusion models have proven significant for the generative Artificial Intelligence (AI) landscape and the interpretability of these models would provide stronger foundation to build powerful and scalable applications. Further, diffusion models form the backbone of many generative AI architectures such as text-to-image generation, speech synthesis, etc. However, the interpretability of these models is limited. Recent advancement in text-to-image generation has inspired many downstream and fundamental applications such as image personalization and image editing.

DreamBooth is one of the pioneer works in text-to-image personalization facilitating recontextualization of a given subject by training with just 3-5 images of that subject. Though it provides an efficient mechanism for single-subject personalization, it fails to achieve similar performance for the multi-subject personalization task. It struggles to generate high-quality output with proper subject disentanglement while showing high fidelity to the text prompt. Though there are multiple follow-up works to extend the capability of DreamBooth, there is very little knowledge about the interpretability of DreamBooth. Further, it fails to preserve the identity of all the subjects in the generated image. Distortion, inappropriate mixing of identity, and repetition of subjects is a common phenomenon observed in the generated images.

SUMMARY

Embodiments of the present disclosure present technological improvements as solutions to one or more of the above-mentioned technical problems recognized by the inventors in conventional systems. For example, in one embodiment, a method for multi-subject personalization with selective U-Net influence is provided. The method includes receiving, via one or more hardware processors, an input comprising a plurality of subject images, a text description pertaining to each of the plurality of subject images and an associated text prompt explaining action to be performed by each of the plurality of subjects. Further, the method includes finetuning via the one or more hardware processors, a trained diffusion model based on the received input using a fine-tuning technique. Furthermore, the method includes generate via the one or more hardware processors, an updated U-Net state dictionary by selecting a plurality of U-Net blocks with associated weights using a finetuned diffusion model, wherein the plurality of U-Net blocks comprises a plurality of down blocks, a plurality of mid blocks and a plurality of up blocks. Furthermore, the method includes generating via the one or more hardware processors, a plurality of influenced blocks from among of a plurality of blocks associated with the trained diffusion model by updating the associated weights based on the plurality of U-Net blocks, wherein the plurality of blocks are selected from a state dictionary associated with the trained diffusion model. Furthermore, the method includes generating via the one or more hardware processors, a plurality of images based on an influenced plurality of influenced blocks using the pretrained diffusion model. Finally, the method includes identifying via the one or more hardware processors, an optimal image from the plurality of generated images using an ensemble-based image selection technique.

In another aspect, a system for Multi-subject personalization with selective U-Net influence is provided. The system includes at least one memory storing programmed instructions, one or more Input /Output (I/O) interfaces, and one or more hardware processors operatively coupled to the at least one memory, wherein the one or more hardware processors are configured by the programmed instructions to receive an input comprising a plurality of subject images, a text description pertaining to each of the plurality of subject images and an associated text prompt explaining action to be performed by each of the plurality of subjects. Further, the one or more hardware processors are configured by the programmed instructions to finetune a trained diffusion model based on the received input using a fine-tuning technique. Furthermore, the one or more hardware processors are configured by the programmed instructions to generate an updated U-Net state dictionary by selecting a plurality of U-Net blocks with associated weights using a finetuned diffusion model, wherein the plurality of U-Net blocks comprises a plurality of down blocks, a plurality of mid blocks and a plurality of up blocks. Furthermore, the one or more hardware processors are configured by the programmed instructions to generate a plurality of influenced blocks from among of a plurality of blocks associated with the trained diffusion model by updating the associated weights based on the plurality of U-Net blocks, wherein the plurality of blocks are selected from a state dictionary associated with the trained diffusion model. Furthermore, the one or more hardware processors are configured by the programmed instructions to generate a plurality of images based on an influenced plurality of influenced blocks using the pretrained diffusion model. Finally, the one or more hardware processors are configured by the programmed instructions to identify an optimal image from the plurality of generated images using an ensemble-based image selection technique.

In yet another aspect, a computer program product including a non-transitory computer-readable medium embodied therein a computer program for Multi-subject personalization with selective U-Net influence is provided. The computer readable program, when executed on a computing device, causes the computing device to receive an input comprising a plurality of subject images, a text description pertaining to each of the plurality of subject images and an associated text prompt explaining action to be performed by each of the plurality of subjects. Further, the computer readable program, when executed on a computing device, causes the computing device to finetune a trained diffusion model based on the received input using a fine-tuning technique. Furthermore, the computer readable program, when executed on a computing device, causes the computing device to generate an updated U-Net state dictionary by selecting a plurality of U-Net blocks with associated weights using a finetuned diffusion model, wherein the plurality of U-Net blocks comprises a plurality of down blocks, a plurality of mid blocks and a plurality of up blocks. Furthermore, the computer readable program, when executed on a computing device, causes the computing device to generate a plurality of influenced blocks from among of a plurality of blocks associated with the trained diffusion model by updating the associated weights based on the plurality of U-Net blocks, wherein the plurality of blocks are selected from a state dictionary associated with the trained diffusion model. Furthermore, the computer readable program, when executed on a computing device, causes the computing device to generate a plurality of images based on an influenced plurality of influenced blocks using the pretrained diffusion model. Finally, the computer readable program, when executed on a computing device, causes the computing device to identify an optimal image from the plurality of generated images using an ensemble-based image selection technique.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for multi-subject personalization with selective U-Net influence, in accordance with some embodiments of the present disclosure.
FIG. 1B illustrates overall functional architecture of the system for the multi-subject personalization with selective U-Net influence, in accordance with some embodiments of the present disclosure.
FIG. 2 illustrates a flow diagram for a processor implemented method for multi-subject personalization with selective U-Net influence, in accordance with some embodiments of the present disclosure.
FIGS. 3A through 3C illustrate example outputs obtained from the system for multi-subject personalization with selective U-Net influence, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

DreamBooth is an extremely powerful technique for single subject text-to-image personalization using diffusion models. However, various recent works have shown the limitations of DreamBooth on the multi-subject personalization (MSP) task. Specifically, it struggles to disentangle the multiple subjects by correctly associating these subjects to the corresponding unique identifier in the text prompt. It results in poor quality image generation with low multi-subject fidelity, image aesthetic and human preference. But it remains unclear as to why DreamBooth, which is a widely popular technique for single-subject personalization fails to scale for the multiple subjects. In such a scenario, the interpretability of Dream-Booth becomes crucial.

To overcome the challenges of the conventional approaches, embodiments herein provide a method and system for multi-subject personalization with selective U-Net influence. The present disclosure presents a selective U-Net influence (SelUT) technique for greater control and interpretability of Dreambooth for multi-subject personalization task.

Specifically, the influence of the trained U-Net block(s) are controlled in the present disclosure during model inference. It provides a greater handle on interpreting the contribution of individual U-Net blocks across quality aspects such as identity disentanglement, image aesthetic, human preference, etc. Furthermore, an ensemble selection strategy is provided, which incorporates the dynamicity between base DreamBooth and the models trained with selective influence of U-Net block(s) which significantly improves the capability of DreamBooth for MSP.

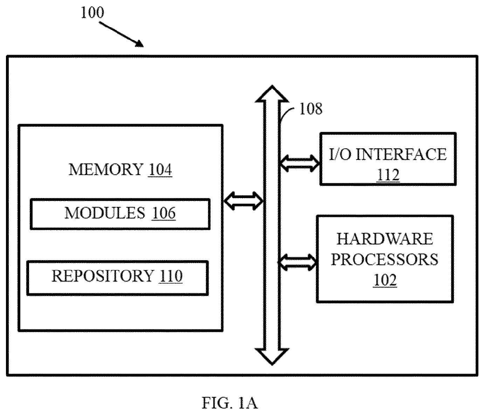

Referring now to the drawings, more particularly to FIG. 1A through FIG. 3C, where similar reference characters denote corresponding features consistently throughout the figures, there are shown preferred embodiments, and these embodiments are described in the context of the following exemplary system and/or method.

FIG. 1A is a functional block diagram of system 100 for Multi-subject personalization with selective U-Net influence, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

The plurality of modules 106 includes programs or coded instructions that supplement applications or functions performed by the system 100 for Multi-subject personalization with selective U-Net influence. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for Multi-subject personalization with selective U-Net influence.

The data repository (or repository) 110 may include a plurality of abstracted pieces of code for refinement and data that is processed, received, or generated as a result of the execution of the plurality of modules in the module(s) 106.

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory, a Relational Database Management System (RDBMS) and a Timeseries Database.

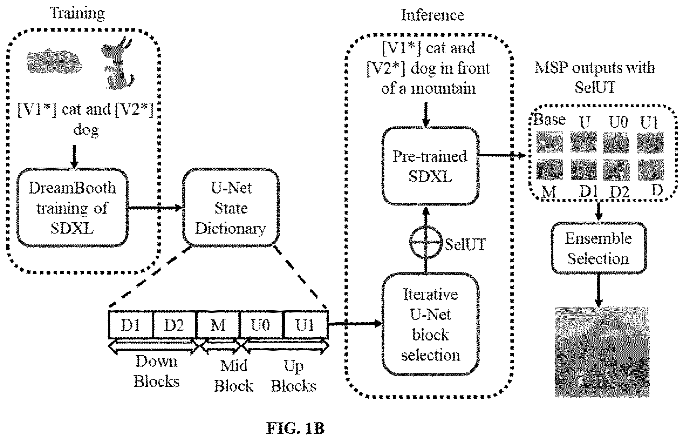

The overall architecture of the system of FIG. 1A is explained in conjunction with FIG. 1B. Now referring to FIG. 1B, initially, a diffusion model like Stable Diffusion Extra Large (SDXL) model is trained using a plurality of objects and corresponding prompts and a U-Net state dictionary is obtained. The U-Net state dictionary includes a plurality of down blocks, a plurality of mid blocks and a plurality of up blocks. During inference stage, an iterative U-Net block selection is performed and the weights associated with the pre-trained Stable Diffusion Extra Large (SDXL) are updated with the weights associated with the plurality of U-Net blocks of the obtained U-Net state dictionary. Further, images are generated for the received input prompt and an optimal image is selected using an ensemble based selection approach.

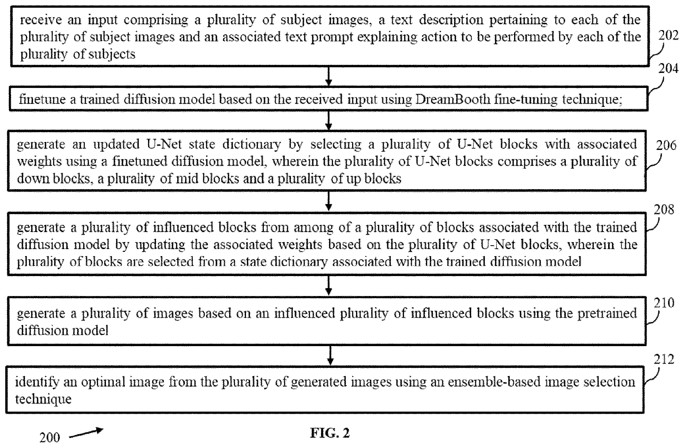

The working of the components of system 100 are explained with reference to the method steps depicted in FIG. 2.

FIG. 2 is an exemplary flow diagram illustrating a method 200 for multi-subject personalization with selective U-Net influence implemented by the system of FIG. 1A and 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and 1B and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types.

The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

Now referring to FIG. 2, at step 202 of method 200, the one or more hardware processors 102 are configured by the programmed instructions to receive an input comprising a plurality of subject images, a text description pertaining to each of the plurality of subject images and an associated text prompt explaining action to be performed by each of the plurality of subjects.

The text prompt is in the format "[V1*]<subject1> and [V2*]<subject2>". For example, "[V1*] bald man and [V2*] girl dancing together", "[V1*] cat watching television and [V2*] Ethan talking on phone", "[V1*] old man and [V2*] cat dancing together" and the like.

At step 204 of the method 200, the one or more hardware processors 102 is configured by the programmed instructions to finetune a trained diffusion model, for example SDXL model, based on the received data using DreamBooth fine-tuning technique.

For example, the diffusion model is trained using training data. The training data includes a plurality of subject image instances, a plurality of subject pairs pertaining to each of the plurality of subjects, a text description pertaining to each of the plurality of subject images and an associated text prompt explaining action to be performed by each of the plurality of subjects. The plurality of image instances includes a plurality of subjects in a white background. The plurality of subjects is one of a) a plurality of similar subjects and b) a plurality of dissimilar subjects. Further, the diffusion model is trained based on the plurality of subject image instances, wherein the diffusion model is trained using DreamBooth training technique.

At step 206 of the method 200, the one or more hardware processors 102 is configured by the programmed instructions to generate an updated U-Net state dictionary by selecting a plurality of U-Net blocks with a corresponding updated weights using a finetuned diffusion model, wherein the plurality of U-Net blocks comprises a plurality of down blocks, a plurality of mid blocks and a plurality of up blocks as shown in FIG. 1B.

At step 208 of the method 200 the one or more hardware processors 102 is configured by the programmed instructions to generate a plurality of influenced blocks from among of a plurality of blocks associated with the trained diffusion model by updating the associated weights based on the plurality of U-Net blocks, wherein the plurality of blocks are selected from a state dictionary associated with the trained diffusion model.

For example, it has been observed that different blocks of the U-Net contribute to different aspects of image generation such as layout, color, and style. As discussed earlier, the interpretability of Dream- Booth remains unclear. To this extent, the present disclosure iteratively influence the selected blocks of a pre-trained SDXL model M with the DreamBooth-based trained U-Net. Formally,

$$M'_b = M(U^M(b)) \oplus U^{SD}(b), \forall b \in B \ldots\ldots\ldots(1)$$

where, $U^M(b)$ and $U^{SD}(b)$ represent the weights of the block b in the U-Net of the pre-trained SDXL model M and the state dictionary of the DreamBooth-based trained U-Net respectively. The operation $\oplus$ signifies updating the b block weights of $U^M$ while freezing the other blocks. The block set B = {D1,D2,D,M,U0,U1,U}. The blocks D1 and D2 (collectively denoted as D) are the down-blocks and U0 and U1 (collectively denoted as U) are the U-Net up-blocks. Block M is the middle block of the U-Net.

At step 210 of the method 200, the one or more hardware processors 102 is configured by the programmed instructions to generate a plurality of images based on an influenced plurality of blocks using the pretrained diffusion model.

At step 212 of the method 200, an output orchestrator module 126 (shown in FIG 1B) when executed by the one or more hardware processors 102 is configured by the programmed instructions to identify an optimal image from the plurality of generated images using an ensemble-based image selection technique

For example, the ensemble based selection technique identifies an optimal image based on a personalization score, wherein the personalization score is average of an Image-Reward score and a Multi-Subject Fidelity and, wherein the image having the maximum Personalization score is identified as the optimal image.

The personalization score for the generated image with model $M_b'$ is defined as given in equation (2).

$$PS\,(P, M_b') = avg(MSF(M_b'), N(IR(M_b')))\ldots\ldots\ldots\ldots(2)$$

where, $N(IR(M_b'))$ shows the normalized IR score and avg() represents the average of both the metric scores. The present disclosure normalizes the IR score between 0 and 1. For a prompt P, the ensemble selection picks the generated image (from one of the eight models) with the best personalization score.

Image-Reward score: This metric rates generated image based on the human preference across parameters such as text-image alignment, human aesthetic, toxicity, and bias and assign scores to them. A higher score signifies that the generated image is highly preferred by humans as compared to the other images generated using the same text prompt

Multi-Subject Fidelity: This metric involves detecting the subjects in the generated image and comparing them against the corresponding subjects in the input images used during training phase. The metric score ranges from 0 to 1, where a higher score signifies high multi-subject fidelity as well as no character mixing.

Experimentation:

Dataset: The present disclosure was trained using Subject-Dataset 11 which consists of 11 diverse characters in different pose. The dataset includes 6 comic characters and 5 real human characters. Out of these 11 characters, a multi-subject dataset of 25 character pairs was prepared by placing two characters on a white background. The character pairing was performed such that the real characters are paired with the real characters and vice-versa.

Training: The SDXL model was trained and DreamBooth Low-Rank Adaptation of Large Language models (LoRA) fine-tuning was performed. 5 instance images were selected randomly for each of the 25 subject pairs. For all the 5 training images of a subject pair, a common training prompt is used: [V1*] <subject1> and [V2*] <subject2>, simple background.

Inference: For evaluation of various aspects of multisubject personalization, 4 prompt categories were considered: (i) Same action prompts (SAP): In this category of prompt, both the subjects are performing the same action (ii) Different action prompts (DAP): In this category of prompt, both the subjects are performing the different actions (iii) Subject 1 prompts (S1P): In this category of prompt, only subject 1 is performing an action and there is no mention of subject 2 in the prompt (iv) Subject2 prompts (S2P): In this category of prompt, only subject 2 is performing an action and there is no mention of subject 1 in the prompt.

Evaluation: Three evaluation metrics were used: multi-subject fidelity, image reward, and personalization score (refer equation 2). To evaluate multi-subject fidelity, Detect and Compare technique was used, which involves detecting the subjects in the generated image and comparing them against the corresponding subjects in the instance images. The metric score ranges from 0 to 1, where a higher score signifies high multi-subject fidelity as well as no character mixing. Furthermore, we use Image-Reward function which rates generated image based on the human preference across parameters such as text-image alignment, human aesthetic, toxicity, and bias. A higher score signifies that the generated image is highly preferred by humans as compared to the other images generated using the same text prompt. We further combine both these metrics and compute the personalization score (refer equation 2) that provides a comprehensive idea about the image generation quality across a number of quality parameters.

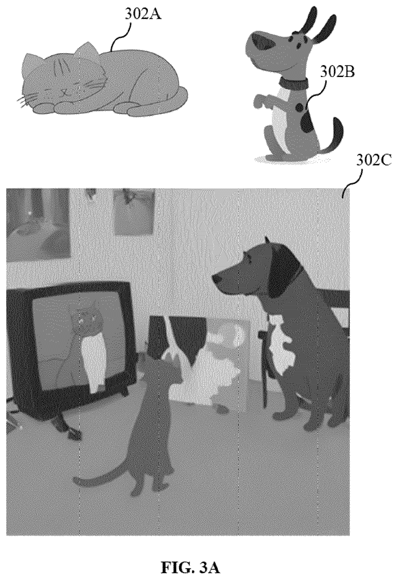

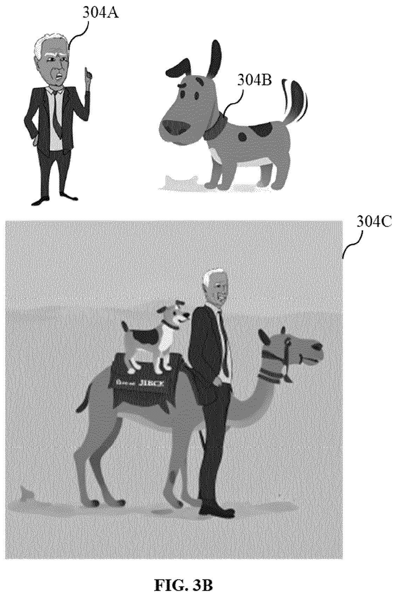

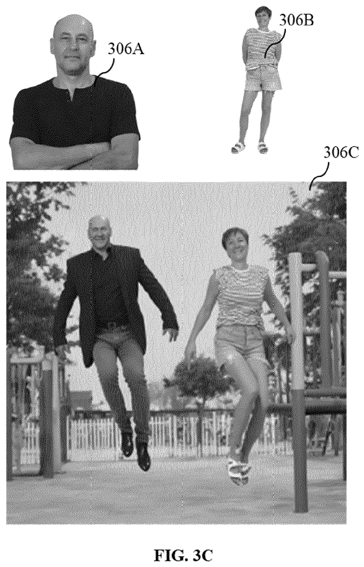

The performance evaluation with these metrics is in Table I. Now referring to Table I, ES stands for Ensemble Selection. Also, in Table II, the percentage of prompts achieving the best metric score is presented. The best metric score is identified for a given prompt by comparing the scores across all the models. The quality results are shown in FIGS. 3A through 3C. Now referring to FIG. 3A, 302A and 302B are the multi-subject instances (cat and dog) in white background and 302C is an output for the prompt "[V1*] cat painting and [V2*] dog watching television". Now referring to FIG. 3B, 304A and 304B are the multi-subject instances (old man and dog) in white background and 304C is the output for the prompt "[V1*] old man and [V2*] dog sitting on camel back". Now referring to FIG. 3C, 306A and 306B are the multi-subject instances (bald man and middle aged woman) in white background and 306C is the output for the prompt "[V1*] bald man and [V2*] middle aged woman jumping in a playground".

Table I

| | Multisubject fidelity | | | | Image Reward | | | | Personalization score | | | |
|---|---|---|---|---|---|---|---|---|---|---|---|---|
| | SAP | DAP | SIP | S2P | SAP | DAP | SIP | S2P | SAP | DAP | SIP | S2P |
| Base | 16.78 | 18.97 | 67.57 | 60.66 | -0.182 | -0.513 | 0.444 | 0.176 | 35.38 | 29.88 | 64.44 | 58.98 |
| U | 15.88 | 17.03 | 11.74 | 11.74 | -0.095 | -0.095 | 0.924 | 0.516 | 39.21 | 32.17 | 37.86 | 34.59 |
| U0 | 17.11 | 16.45 | 60.58 | 56.75 | -0.062 | -0.061 | 0.918 | 0.591 | 40.23 | 31.94 | 62.50 | 56.99 |
| U1 | 11.81 | 12.55 | 55.57 | 54.01 | 0.116 | 0.115 | 0.957 | 0.689 | 36.83 | 32.26 | 61.73 | 57.01 |
| M | 11.34 | 12.46 | 56.36 | 56.19 | 0.141 | 0.140 | 1.04 | 0.801 | 38.10 | 32.66 | 62.37 | 59.21 |
| D1 | 12.58 | 13.18 | 55.62 | 54.29 | 0.023 | 0.023 | 0.984 | 0.699 | 38.40 | 31.40 | 60.46 | 57.58 |
| D2 | 12.58 | 14.01 | 57.68 | 55.14 | -0.016 | -0.016 | 0.950 | 0.701 | 39.36 | 31.38 | 60.31 | 57.84 |
| D | 13.31 | 13.53 | 11.74 | 11.74 | -0.023 | -0.022 | 0.882 | 0.690 | 39.28 | 30.95 | 40.28 | 36.73 |
| ES | 26.32 | 27.34 | 72.56 | 63.49 | 1.36 | 1.15 | 1.56 | 1.42 | 53.92 | 50.32 | 76.75 | 71.70 |

Table II

| | Multisubject fidelity | | | | Image Reward | | | | Personalization score | | | |
|---|---|---|---|---|---|---|---|---|---|---|---|---|
| | SAP | DAP | SIP | S2P | SAP | DAP | SIP | S2P | SAP | DAP | SIP | S2P |
| Base | 25.06 | 20.53 | 58.28 | 46.85 | 0 | 0 | 0 | 0 | 14.93 | 13.33 | 27.14 | 29.14 |
| U | 20.26 | 16.53 | 5.14 | 0 | 0 | 0 | 0 | 0 | 15.2 | 13.6 | 2.0 | 0.0 |
| U0 | 25.06 | 34.13 | 17.71 | 16.85 | 16.53 | 12.53 | 19.71 | 14.28 | 18.13 | 12.26 | 17.42 | 12.85 |
| U1 | 9.06 | 10.13 | 5.14 | 13.71 | 16 | 17.86 | 17.14 | 16 | 8.53 | 13.06 | 14.28 | 13.42 |
| M | 6.13 | 8 | 6.85 | 9.71 | 21.33 | 20 | 14.57 | 18.57 | 9.86 | 12.53 | 12.57 | 16.85 |
| D1 | 8.8 | 10.67 | 6.85 | 12.85 | 16 | 18.4 | 16 | 10.57 | 9.86 | 14.40 | 10.57 | 11.99 |
| D2 | 0 | 0 | 0 | 0 | 17.86 | 14.56 | 17.14 | 21.71 | 11.73 | 12.26 | 11.99 | 15.71 |
| D | 0 | 0 | 0 | 0 | 12.26 | 15.73 | 15.42 | 18.85 | 11.73 | 8.53 | 4.0 | 0.0 |

Several interesting observations were made during experimentation:
Block U0 tends to capture the subject identity: It was observed that the model with block U0 shows competitive performance to the base DreamBooth model for the multi-subject fidelity metric (refer Table I). It also shows similar behavior with the percentage of prompts achieving the best metric score (refer Table 3). It suggests that the subject identity is largely controlled through the U0 block in the U-Net.

Block M tends to control the image aesthetic: As shown in Table I, the model with block M achieves the second best image reward score (after the ensemble selection) on all the prompt categories. It further denotes that the middle block in the U-Net tends to control the aesthetic in the generated image producing high-quality fine-grained details.

Blocks U and D poorly aligns the unique identifier in the text prompt with the subject's visual concepts: As shown in Table I, the models with U and D blocks achieve significantly lower multi-subject fidelity scores on S1P and S2P prompt categories. They also consistently fail to generate the top-ranked images for these two prompt categories (see Table II). It signifies that these models fails to align the subject's unique identifier in the text prompt ([V1*] or [V2*]) with the visual concepts of these subjects in the image.

DreamBooth with selective U-Net influence generates images that are likely to be more preferred by humans: It was observed that the image reward score for the base DreamBooth model is extremely low as compared to the other models. Also, as observed in Table II, the base DreamBooth model consistently fails to generate the top-ranked images on the image reward metric for all the prompt categories signifying the lower aesthetic quality of the model.

DreamBooth is inherently a single-subject personalization technique. It was observed that all the three metric scores for the base DreamBooth are significantly higher for the prompt categories with only the single subject mentioned as compared to the prompt categories with the mention of both the subjects. It further reinforces our observation that DreamBooth inherently is a single-subject personalization technique that requires a systematic investigation to extend its capability for the multi-subject personalization task.

Selective U-Net influence and ensemble selection significantly boost the DreamBooth's personalization capability: In Table I, we consistently observe that the ensemble selection outperforms the individual models by a large margin for all the prompt categories and on all the three metrics. Ensemble selection of models has been largely studied and successfully applied across numerous machine learning tasks such as classification, regression, time-series forecasting, etc. It also help here in the multisubject personalization task to boost the performance of DreamBooth with greater control and interpretability

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address the unresolved problem of multisubject personalization. The present disclosure provides a selective U-Net influence and ensemble selection based approach which provides greater interpretability and boost the capability of DreamBooth for multi-subject personalization.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200), the method comprising:

receiving (202), via one or more hardware processors, an input comprising a plurality of subject images, a text description pertaining to each of the plurality of subject images and an associated text prompt explaining action to be performed by each of the plurality of subjects;

finetuning (204), via the one or more hardware processors, a trained diffusion model based on the received input using a fine-tuning technique;

generating (206), via the one or more hardware processors, an updated U-Net state dictionary by selecting a plurality of U-Net blocks with associated weights using a finetuned diffusion model, wherein the plurality of U-Net blocks comprises a plurality of down blocks, a plurality of mid blocks and a plurality of up blocks;

generating (208), via the one or more hardware processors, a plurality of influenced blocks from among of a plurality of blocks associated with the trained diffusion model by updating the associated weights based on the plurality of U-Net blocks, wherein the plurality of blocks are selected from a state dictionary associated with the trained diffusion model;

generating (210), via the one or more hardware processors, a plurality of images based on an influenced plurality of influenced blocks using the pretrained diffusion model; and

identifying (212), via the one or more hardware processors, an optimal image from the plurality of generated images using an ensemble-based image selection technique.

2. The method as claimed in claim 1, wherein the ensemble based selection technique identifies an optimal image based on a personalization score, wherein the personalization score is average of an Image-Reward score and a Multi-Subject Fidelity, and wherein the image having the maximum Personalization score is identified as the optimal image.

3. The method as claimed in claim 1, the finetuning of the trained diffusion model is performed using DreamBooth technique.

4. The method as claimed in claim 1, wherein the diffusion model is trained by:

receiving a training data comprising a plurality of subject image instances comprising a plurality of subjects in a white background, a plurality of subject pairs pertaining to each of the plurality of plurality of subjects, a text description pertaining to each of the plurality of subject images and an associated text prompt explaining action to be performed by each of the plurality of subjects, wherein the plurality of subjects is one of a) a plurality of similar subjects and b) a plurality of dissimilar subjects; and

training the diffusion model based on the plurality of subject image instances, wherein the diffusion model is trained using DreamBooth training technique.

5. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:

receive an input comprising a plurality of subject images, a text description pertaining to each of the plurality of subject images and an associated text prompt explaining action to be performed by each of the plurality of subjects;

finetune a trained diffusion model based on the received input using a fine-tuning technique;

generate an updated U-Net state dictionary by selecting a plurality of U-Net blocks with associated weights using a finetuned diffusion model, wherein the plurality of U-Net blocks comprises a plurality of down blocks, a plurality of mid blocks and a plurality of up blocks;

generate a plurality of influenced blocks from among of a plurality of blocks associated with the trained diffusion model by updating the associated weights based on the plurality of U-Net blocks, wherein the plurality of blocks are selected from a state dictionary associated with the trained diffusion model;

generate a plurality of images based on an influenced plurality of influenced blocks using the pretrained diffusion model; and

identify an optimal image from the plurality of generated images using an ensemble-based image selection technique.

6. The system of claim 5, wherein the ensemble based selection technique identifies an optimal image based on a personalization score, wherein the personalization score is average of an Image-Reward score and a Multi-Subject Fidelity, and wherein the image having the maximum Personalization score is identified as the optimal image.

7. The system of claim 5, the finetuning of the trained diffusion model is performed using DreamBooth technique.

8. The system of claim 5, wherein the diffusion model is trained by:

   receiving a training data comprising a plurality of subject image instances comprising a plurality of subjects in a white background, a plurality of subject pairs pertaining to each of the plurality of plurality of subjects, a text description pertaining to each of the plurality of subject images and an associated text prompt explaining action to be performed by each of the plurality of subjects, wherein the plurality of subjects is one of a) a plurality of similar subjects and b) a plurality of dissimilar subjects; and
   training the diffusion model based on the plurality of subject image instances, wherein the diffusion model is trained using DreamBooth training technique.

9. One or more non-transitory machine-readable information storage mediums comprising one or more instructions which when executed by one or more hardware processors cause:

   receiving , an input comprising a plurality of subject images, a text description pertaining to each of the plurality of subject images and an associated text prompt explaining action to be performed by each of the plurality of subjects;
   finetuning , via the one or more hardware processors, a trained diffusion model based on the received input using a fine-tuning technique;
   generating , via the one or more hardware processors, an updated U-Net state dictionary by selecting a plurality of U-Net blocks with associated weights using a finetuned diffusion model, wherein the plurality of U-Net blocks comprises a plurality of down blocks, a plurality of mid blocks and a plurality of up blocks;
   generating , via the one or more hardware processors, a plurality of influenced blocks from among of a plurality of blocks associated with the trained diffusion model by updating the associated weights based on the plurality of U-Net blocks, wherein the plurality of blocks are selected from a state dictionary associated with the trained diffusion model;
   generating , via the one or more hardware processors, a plurality of images based on an influenced plurality of influenced blocks using the pretrained diffusion model; and
   identifying , via the one or more hardware processors, an optimal image from the plurality of generated images using an ensemble-based image selection technique.

10. The one or more non-transitory machine-readable information storage mediums of claim 9, wherein the ensemble based selection technique identifies an optimal image based on a personalization score, wherein the personalization score is average of an Image-Reward score and a Multi-Subject Fidelity, and wherein the image having the maximum Personalization score is identified as the optimal image.

11. The one or more non-transitory machine-readable information storage mediums of claim 9, the finetuning of the trained diffusion model is performed using DreamBooth technique.

12. The one or more non-transitory machine-readable information storage mediums of claim 9, wherein the diffusion model is trained by:

   receiving a training data comprising a plurality of subject image instances comprising a plurality of subjects in a white background, a plurality of subject pairs pertaining to each of the plurality of plurality of subjects, a text description pertaining to each of the plurality of subject images and an associated text prompt explaining action to be performed by each of the plurality of subjects, wherein the plurality of subjects is one of a) a plurality of similar subjects and b) a plurality of dissimilar subjects; and
   training the diffusion model based on the plurality of subject image instances, wherein the diffusion model is trained using DreamBooth training technique.

100

MEMORY 104

MODULES 106

REPOSITORY 110

108

I/O INTERFACE
112

HARDWARE
PROCESSORS
102

FIG. 1A

**FIG. 1B**

receive an input comprising a plurality of subject images, a text description pertaining to each of the plurality of subject images and an associated text prompt explaining action to be performed by each of the plurality of subjects
202

204

finetune a trained diffusion model based on the received input using DreamBooth fine-tuning technique;

generate an updated U-Net state dictionary by selecting a plurality of U-Net blocks with associated weights using a finetuned diffusion model, wherein the plurality of U-Net blocks comprises a plurality of down blocks, a plurality of mid blocks and a plurality of up blocks
206

208

generate a plurality of influenced blocks from among of a plurality of blocks associated with the trained diffusion model by updating the associated weights based on the plurality of U-Net blocks, wherein the plurality of blocks are selected from a state dictionary associated with the trained diffusion model

generate a plurality of images based on an influenced plurality of influenced blocks using the pretrained diffusion model
210

212

identify an optimal image from the plurality of generated images using an ensemble-based image selection technique

200 ➤

**FIG. 2**

FIG. 3A

FIG. 3B

FIG. 3C

Europäisches
Patentamt

European
Patent Office

Office européen
des brevets

# EUROPEAN SEARCH REPORT

**Application Number**

EP 25 18 8746

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARUSHI JAIN ET AL: "Multi-Subject Personalization", ARXIV.ORG, CORNELL UNIVERSITY LIBRARY, 201 OLIN LIBRARY CORNELL UNIVERSITY ITHACA, NY 14853, 21 May 2024 (2024-05-21), XP091762793, * page 1, paragraph 1 - paragraph 3 * * page 2, paragraph 1 * * page 5, paragraph 2 - last paragraph * * figures 4, 5, 6, 7 * * page 4, paragraph 2 - paragraph 4 * * page 7, last paragraph - page 8, last paragraph * ----- | 1-12 | INV. G06N3/045 G06N3/0475 |
| A | KUMARI NUPUR ET AL: "Multi-Concept Customization of Text-to-Image Diffusion", 2023 IEEE/CVF CONFERENCE ON COMPUTER VISION AND PATTERN RECOGNITION (CVPR), IEEE, 17 June 2023 (2023-06-17), pages 1931-1941, XP034401624, DOI: 10.1109/CVPR52729.2023.00192 [retrieved on 2023-08-22] * page 1931, right-hand column, paragraph 1 - page 1932, left-hand column, paragraph 4 * * page 1932, right-hand column, last paragraph - page 1935, left-hand column, paragraph 2; figures 2, 8 * ----- -/-- | 1-12 | |

|  | TECHNICAL FIELDS SEARCHED (IPC) |
|---|---|
|  | G06N |

The present search report has been drawn up for all claims

| Place of search | Date of completion of the search | Examiner |
|---|---|---|
| Munich | 1 December 2025 | Herri, Edmond |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ......................................................................................................
& : member of the same patent family, corresponding document

EPO FORM 1503 03.82 (P04C01)

**EUROPEAN SEARCH REPORT**

Europäisches
Patentamt
European
Patent Office
Office européen
des brevets

Application Number

EP 25 18 8746

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Cao Pu ET AL: "Controllable Generation with Text-to-Image Diffusion Models: A Survey", IEEE Transactions on Patterns Analysis and Machine Intelligence, 7 March 2024 (2024-03-07), pages 1-20, XP093238248, DOI: 10.48550/arXiv.2403.04279 Retrieved from the Internet: URL:https://arxiv.org/pdf/2403.04279 * page 6, left-hand column, last paragraph - page 7, right-hand column, paragraph 1 * ----- | 1-12 | |
| A | CHEN HONG ET AL: "DisenDreamer: Subject-Driven Text-to-Image Generation With Sample-Aware Disentangled Tuning", IEEE TRANSACTIONS ON CIRCUITS AND SYSTEMS FOR VIDEO TECHNOLOGY, IEEE, USA, vol. 34, no. 8, 24 February 2024 (2024-02-24), pages 6860-6873, XP011979090, ISSN: 1051-8215, DOI: 10.1109/TCSVT.2024.3369757 [retrieved on 2024-02-26] * page 6861, left-hand column, paragraph 2 - right-hand column, last paragraph; figure 1 * * page 6862, right-hand column, paragraph 1; figure 2 * * page 6863, left-hand column, paragraph 3 - page 6865, left-hand column, paragraph 3 * ----- | 1-12 | TECHNICAL FIELDS SEARCHED (IPC) |

The present search report has been drawn up for all claims

| Place of search | Date of completion of the search | Examiner |
|---|---|---|
| Munich | 1 December 2025 | Herri, Edmond |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421053533